(19) Europäisches Patentamt

European Patent Office

Office européen des brevets

(11) **EP 0 659 196 B1**

(12) **EUROPÄISCHE PATENTSCHRIFT**

(45) Veröffentlichungstag und Bekanntmachung des Hinweises auf die Patenterteilung:
**27.11.1996 Patentblatt 1996/48**

(21) Anmeldenummer: **93919260.5**

(22) Anmeldetag: **04.09.1993**

(51) Int Cl.⁶: **C08F 291/02**, C08F 265/04

(86) Internationale Anmeldenummer:
**PCT/EP93/02386**

(87) Internationale Veröffentlichungsnummer:
**WO 94/05716 (17.03.1994 Gazette 1994/07)**

(54) **FORMMASSE**

MOULDING MATERIAL

MATIERE MOULABLE

(84) Benannte Vertragsstaaten:
**BE DE ES FR GB IT NL**

(30) Priorität: **10.09.1992 DE 4230257**

(43) Veröffentlichungstag der Anmeldung:
**28.06.1995 Patentblatt 1995/26**

(73) Patentinhaber: **BASF Aktiengesellschaft**
**67063 Ludwigshafen (DE)**

(72) Erfinder:
- **NIESSNER, Norbert**
  **D-6701 Friedelsheim (DE)**
- **MCKEE, Graham, Edmund**
  **D-6940 Weinheim (DE)**
- **FISCH, Herbert**
  **D-6706 Wachenheim (DE)**

(56) Entgegenhaltungen:
**EP-A- 0 390 144          EP-A- 0 450 511**
**DE-A- 1 802 432          US-A- 3 992 485**

**Beschreibung**

Die Erfindung betrifft kautschukelastische, teilchenförmige Pfropfcopolymerisate und daraus hergestellte schlagzäh modifizierte Formmassen, z.B. eine Formmasse vom ABS-Typ mit einem besonders feinteiligen Kautschuk-Anteil.

Es ist bekannt, daß wasserunlösliche Öle mit einer Kombination geeigneter Emulgatoren so fein dispergiert werden können, daß optisch klare, isotrope Emulsionen entstehen, die dann als "Mikroemulsionen" bezeichnet werden (EP 449 450). Ähnliche Systeme sind auch als "Miniemulsionen" bekannt (D.O. Shah, Ed. "Macro- and Microemulsion: Theory and Practices; American Chemical Society; Washington DC, 1985; ACS Symp. Series, 272). In Miniemulsionen und Mikroemulsionen werden im Gegensatz zu den üblichen Emulsionen ("Makroemulsionen") sehr kleine Teilchengrößen der Ölphase in Wasser erhalten.

Mikroemulsionen sollen im Gegensatz zu Makroemulsionen keine eigentlichen Öltröpfchen mehr enthalten, sondern das Öl soll sich vollständig in den Emulgatormicellen befinden, welche sehr klein sein können (je nach Emulgatormenge etwa zwischen 10 und 100 nm Durchmesser, s. auch: L.M. Gan, C.H. Chew, I. Lye, T. Imae; Polymer Bulletin 25, S. 193, 1991). Nach anderer Ansicht gibt es bislang noch keine allgemein anerkannte Definition des Ausdrucks "Mikroemulsion" (M. Antonietti et. al.; Macromolecules 24, 6636, 1991). Allgemein akzeptiert ist jedoch, daß sich eine Mikroemulsion von einer herkömmlichen Emulsion durch ihre optische Transluzenz bzw. Transparenz, durch ihre sehr kleinen Teilchen und ihre thermodynamische Stabilität unterscheidet.

Mikroemulsionen von Polymeren sind auch schon bekannt. So beschreibt EP-A-391 343 feinteilige Mikroemulsionen von Polyacrylaten mit einer Glasübergangstemperatur unterhalb von 20°C und mit einer Teilchengröße unterhalb von 600 Å, d.h. 60 nm. Sie finden u.a. als Papierstreich-Dispersionen Verwendung.

Die JA-A-54 103 497 beschreibt die Emulsionspolymerisation von Acrylaten in Gegenwart hoher Mengen an anionischen Emulgatoren zur Erzielung kleiner Teilchengrößen. Durch Zusatz von ionischen Elektrolyten ("Salzen") wird die Viskosität der Emulsion kontrolliert. Man erhält Emulsionspartikel mit einem Durchmesser zwischen 5 und 50 nm.

JA-A-54 103 498 beschreibt die Herstellung einer Acrylat-Monomer-Emulsion mit großen Mengen an Emulgator und anschließender Polymerisation. Durch Zusatz von ionischen Elektrolyten ("Salzen") wird die Viskosität der Emulsion kontrolliert. Es werden Teilchengrößen zwischen 5 und 50 nm erhalten.

JA-A-54 056 410 beschreibt die Herstellung von Acrylat-Mikroemulsionen mit bimodaler Teilchengrößenverteilung durch Scherbeanspruchung von Emulsionen mit Teilchengrößen oberhalb von 0,1 μm.

EP-A-450 511 beschreibt Pfropfpolymerisate deren Pfropfgrundlage eine mittlere Teilchengröße von 30 bis 1000 nm, aufweist, wobei sie jedoch Säure-Funktionen im Pfropfkern und basische Monomereinheiten in der Pfropfhülle enthalten. Diese Polymerisate neigen in Abmischung mit Thermoplasten jedoch stark zur Agglomeration, weshalb sie nicht für die Herstellung von Formmassen mit hoher Transparenz geeignet sind.

Es ist eine Aufgabe der Erfindung, Formmassen zu schaffen, die schlagzäh sind und gleichzeitig eine hohe Transparenz - ähnlich wie die nicht schlagzäh modifizierten Grundpolymeren - besitzen.

Es wurde nun gefunden, daß durch Pfropfung von Mikroemulsionen von Kautschukpolymeren und Mischung der erhaltenen Pfropfpolymerisate mit Thermoplasten schlagzähmodifizierte Thermoplaste erhalten werden, die neben einer guten Schlagzähigkeit, eine gute Fließfähigkeit, hohe Steifigkeit und Transparenz bei hervorragendem Glanz aufweisen. Ein weiterer Vorteil dieser Formmassen ist ihre gute Einfärbbarkeit.

Die Erfindung beruht u.a. auf der Beobachtung, daß trotz hohen Emulgatorgehalts der emulgierten Pfropfgrundlage die zum Aufbau der Pfropfhülle verwendeten Monomeren tatsächlich vollständig auf die Pfropfgrundlage aufpfropfen und keine neuen Teilchen gebildet werden.

Wichtig ist dabei, daß die Teilchengröße der Pfropfgrundlage unterhalb von 40 nm, vorteilhaft unterhalb von 30 nm und besonders vorteilhaft unterhalb von 25 nm liegt, und die Teilchengröße des gesamten Pfropfpolymerisats, bestehend aus Pfropfgrundlage und darauf gepfropfter Hülle entsprechend unterhalb von 50 nm bzw. unterhalb von 40 nm bzw. unterhalb von 30 nm liegt.

Erfindungsgegenstand ist demnach allgemein ein Pfropfcopolymerisat A aus, bezogen auf A,

A1: 1 - 90 Gew.-% einer teilchenförmigen Pfropfgrundlage A1 mit einer Glastemperatur unterhalb von 0°C, die eine mittlere Teilchengröße unterhalb von 40 nm aufweist und

A2: 10 - 99 Gew.-% einer Pfropfauflage A2 aus weiche oder harte Polymere bildenden, olefinisch ungesättigten Monomeren,

wobei das Pfropfcopolymerisat A insgesamt eine mittlere Teilchengröße von weniger als 50 nm aufweist.

Ein spezieller Erfindungsgegenstand ist weiter eine Formmasse aus, bezogen auf die Summe aus A' und B',

A': 1 - 99 Gew.-% eines Pfropfcopolymerisats A aus, bezogen auf A,

A1': 1 - 90 Gew.-% einer teilchenförmigen Pfropfgrundlage A1 mit einer Glastemperatur unterhalb von 0°C, die eine Teilchengröße von weniger 40 nm aufweist und

A2' :   10 - 99 Gew.-% einer Pfropfauflage A2' aus, bezogen auf A2',

A21:   40 - 100 Gew.-% Einheiten des Styrols, eines substituierten Styrols oder eines harte Polymere bildenden (Meth)acrylsäureesters oder deren Mischungen (A21) und

A22:   bis 60 Gew.-% Acrylnitril oder Methacrylnitril (A22)

wobei das Pfropfcopolymerisat A' insgesamt eine mittlere Teilchengröße von weniger als 50 nm aufweist und

B' :   1 - 99 Gew.-% eines thermoplastischen Copolymerisats B' aus, bezogen auf B',

B1' :   50 - 100 Gew.-% Styrol oder eines substituierten Styrols oder eines harte Polymere bildenden (Meth)acrylsäureesters oder deren Mischungen (B1') und

B2' :   bis 50 Gew.-% Acrylnitril oder Methacrylnitril (B2').

Zur Benutzung der Erfindung ist im einzelnen das folgende zu sagen:

Die erfindungsgemäße Komponente A ist ein - kautschukelastisches - teilchenförmiges Polymerisat mit einer Glastemperatur unterhalb von 0°C, vorzugsweise unterhalb von -20°C und besonders bevorzugt unterhalb von -30°C und einer mittleren Teilchengröße $d_{50}$ unterhalb von 50 nm, bevorzugt unterhalb von 40 nm und besonders bevorzugt unterhalb von 30 nm, wobei die Pfropfgrundlage A1 der erfindungsgemäßen Komponente A eine mittlere Teilchengröße $d_{50}$ unterhalb von 40 nm, bevorzugt unterhalb von 30 und besonders bevorzugt unterhalb von 25 nm aufweist.

Als mittlere Teilchengröße werden die aus der integralen Massenverteilung bestimmten Größen angegeben. Bei den mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z, und Z.-Polymere 250 (1972), Seiten 782 bis 796, bestimmt wurden. Die Ultrazentrifuge liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem $d_{50}$-Wert enspricht. Ebenso haben dann 50 Gew.-% der Teilchen einen größeren Durchmesser als der $d_{50}$-Wert. Zur Charakterisierung der Breite der Teilchengrößenverteilung der Kautschukteilchen kann man neben dem $d_{50}$-Wert (mittlerer Teilchendurchmesser) die sich aus der integralen Massenverteilung ergebenden $d_{10}$- und $d_{90}$-Werte bestimmen. Der $d_{10}$- bzw. $d_{90}$-Wert der integralen Massenverteilung ist dabei entsprechend dem $d_{50}$-Wert definiert mit dem Unterschied, daß sie auf 10 bzw. 90 Gew.-% der Teilchen bezogen sind. Der Quotient

$$\frac{d_{90} - d_{10}}{d_{50}} = Q$$

stellt ein Maß für die Verteilungsbreite der Teilchengröße dar. Erfindungsgemäße Pfropfgrundlagen und Pfropfpolymere haben Q-Werte von 0,05 bis 1,0, insbesondere 1,5 bis 0,8.

Da die erfindungsgemäßen Pfropfcopolymerisate aufgrund ihrer geringen Teilchengröße in Emulsion das Licht nur wenig streuen, erscheinen diese Emulsionen für den Beobachter teilweise opak bis transluzent und im Grenzfall transparent. Für den Fall hoher Transluzenz (hohe "Durchsichtigkeit") bzw. Transparenz (Pfropfcopolymer-Teilchen streuen das Licht praktisch nicht mehr) ist die oben geschilderte Methode der Teilchengrößenbestimmung durch Ultrazentrifuge schwierig. Hier bietet sich als weiteres Verfahren zur Bestimmung der mittleren Teilchengröße d(50) die sogenannte dynamische Lichtstreuung oder auch "quasi-elastische" Lichtstreuung an. Diese Methode ist z.B. beschrieben in: B.J. Berne, R. Pecora, "Dynamic Light Scattering", John Wiley & Sons, Inc. New York 1976, und in : B.B. Weiner, "Modern Methods of Particle Size Analysis", Chapter 3 (Ed. H.G. Barth), John Wiley & Sons, Inc. New York 1984.

Hierbei wird der Diffusionskoeffizient kolloidal verteilter Teilchen in Lösung bzw. Emulsion bestimmt und anschließend rechnerisch über die Stokes-Einstein-Gleichung mit dem hydrodynamischen Durchmesser der Teilchen, einem Maß für die Teilchengröße verknüpft. Haben die Teilchen eine Teilchengrößenverteilung, wie sie bei der Beschreibung der Messung mittels Ultrazentrifuge erwähnt wurde, so wird ein mittlerer Teilchendurchmesser erhalten. Erfindungsgemäße Pfropfcopolymerisate sollten danach einen mittleren Teilchendurchmesser von 50 nm oder weniger aufweisen. Die Verteilungsbreite oder Teilchengrößen-Uneinheitlichkeit Q ist wie oben beschrieben definiert.

Das Pfropfpolymerisat A ist ein im allgemeinen ein- oder mehrstufig, d.h. aus einem Kern und einer oder mehreren Hüllen aufgebautes Polymerisat. Das Polymerisat besteht aus einem Pfropfkern A1 und eventuell einer oder - bevorzugt - mehrerer darauf gepfropfter Hüllen A2, den sogenannten Pfropfauflagen oder Pfropfhüllen. Der Pfropfkern A1 kann wiederum ein mehrstufig aufgebautes Polymerisat sein (sog. "Kern/Schale-Aufbau", "core-shell morphology"). Beispielsweise kann ein kautschukelastischer Kern ($T_g < 0°C$) von einer "harten" Schale (Polymeres mit $T_g > 0°C$) umhüllt sein. Geeignet sind jedoch auch Pfropfkautschuke mit einer weichen Schale (Tg < 0°C).

Immer ist die mittlere Teilchengröße des gesamten Polymerisats A kleiner als 50 nm, bevorzugt kleiner als 40 nm und besonders bevorzugt kleiner als 30 nm.

Bevorzugt besteht A aus einem mehrstufig aufgebauten Pfropfcopolymerisat, wobei die Pfropfstufen im allgemeinen aus harzbildenden Monomeren hergestellt sind und eine Glastemperatur $T_g$ oberhalb von 30°C haben. Der mehrstufige Aufbau dient i.a. dazu, eine (Teil) verträglichkeit der Kautschukteilchen A mit dem Thermoplasten B herzustellen.

Pfropfcopolymerisate A werden hergestellt beispielsweise durch Pfropfung von mindestens einem der im folgenden aufgeführten Monomeren A2 auf mindestens eine der im folgenden aufgeführten Pfropfgrundlagen A1.

Als Pfropfkernmaterial A1 können die einschlägig üblichen Kautschuke Verwendung finden. Es können beispielsweise Naturkauschuk, Epichlorhydrin-Kautschuke, Ethylen-Vinylacetat-Kautschuke, Polyethlyenchlorsulfonkautschuke, Siliconkautschuke, Polyetherkautschuke, Dienkautschuke, hydrierte Dienkautschuke, Polyalkenamer-Kautschuke, Acrylatkautschuke, Ethylen-Propylen-Kautschuke, Ethylen-Propylen-Dien-Kautschuke, Butylkautschuke und Fluorkautschuke verwendet werden. Bevorzugt wird Acrylatkautschuk, Dienkautschuk, Ethylen-Propylen-Dien-Kautschuk, hydrierter Dienkautschuk oder Siliconkautschuk eingesetzt.

Acrylatkautschuk sind beispielsweise Alkylacrylat-Kautschuke aus einem oder mehreren $C_4$-$C_8$-Alkylacrylaten, wobei mindestens teilweise Butyl-, Hexyl-, Octyl- oder 2-Ethylhexylacrylat verwenden worden sind. Diese Alkylacrylatkautschuke können bis zu 30 Gew.-% harte Polymere bildende Monomere wie Vinylacetat, (Meth) acrylnitril, Styrol, substituiertes Styrol, Methylmethacrylat, Vinylether, einpolymerisiert enthalten. Die Acrylatkautschuke enthalten weiterhin bis zu 10 Gew.-%, vorzugsweise 1 bis 5 Gew.-% an vernetzend wirkenden, polyfunktionellen Monomeren. Beispiele sind Monomere, die zwei oder mehr zur Copolymerisation befähigte Doppelbindungen enthalten, die nicht in 1,3-Stellung konjugiert sind. Geeignete Vernetzungsmonomere sind beispielsweise Divinylbenzol, Diallylmaleat, Diallylfumarat, Diallylphthalat, Triallylcyanurat, Trialylisocyanurat, Triallylphosphat, Allylmethacrylat. Als besonders günstiges Vernetzungs-Monomer hat sich der Acrylsäureester des Tricyclodecenylalkohols erwiesen (vgl. DE-PS 12 60 135).

Geeignet sind Produkte, die als Kern einen vernetzten Dienkautschuk aus einem oder mehreren konjugierten Dienen, wie Polybutadien oder ein Copolymerisat eines konjugierten Diens mit einem ethylenisch ungesättigten Monomer, wie Styrol und/oder Acrylnitril oder mehrere Pfropfhüllen enthalten, wobei mindestens eine davon ein Acrylatkautschuk ist.

Dien-Kautschuke sind beispielsweise Homopolymerisate von konjugierten Dienen mit 4 bis 8 Kohlenstoffatomen wie Butadien, Isopren, Piperylen und Chloropren, Copolymerisate solcher Diene untereinander und Copolymerisate solcher Diene mit Styrol-, Acryl- oder Methacrylverbindungen (z.B. Acrylnitril, Methacrylnitril, Acrylsäure, Methacrylsäure, Acrylsäurebutylester, Acrylsäureethylhexylester und Methylmethacrylat). Besonders bevorzugte Dien-Kautschuke sind Butadien-, Butadien-Styrol-, Butadien-Methylmethacrylat-, Butadien-Acrylsäurebutylester- und Butadien-Acrylnitril-Kautschuke.

Geeignete Siliconkautschuke können z.B. vernetzte Siliconkautschuke aus Einheiten der allgemeinen Formeln $R_2SiO$, $RSiO_{3/2}$, $R_3SiO_{1/2}$ und $SiO_{2/4}$ sein, wobei R einen einwertigen Rest darstellt. Die Menge der einzelnen Siloxaneinheiten sind dabei so bemessen, daß auf 100 Einheiten der Formel $R_2SiO$ 0 bis 10 Mol-Einheiten der Formel $RSiO_{3/2}$, 0 bis 1,5 Mol-Einheiten $R_3SiO_{1/2}$ und 0 bis 3 Mol-Einheiten $SiO_{2/4}$ vorhanden sind. R kann dabei entweder ein einwertiger gesättigter Kohlenwasserstoffrest mit 1 - 18 C-Atomen, der Phenylrest oder der Alkoxy-Rest oder eine radikalisch leicht angreifbare Gruppe wie der Vinyl- oder der Mercaptopropylrest sein. Bevorzugt ist, daß mindestens 80 % aller Reste R Methyl sind; insbesondere bevorzugt sind Kombinationen aus Methyl und Ethyl oder Methyl.

Bevorzugte Siliconkautschuke enthalten eingebaute Einheiten radikalisch angreifbarer Gruppen, insbesondere Vinyl-, Allyl-, Halogen-, Mercaptogruppen, vorzugsweise in Mengen von 2 bis 10 mol-%, bezogen auf alle Reste R. Sie können beispielsweise hergestellt werden wie in EP-A 260 558 beschrieben.

Geeignete Monomere zur Bildung der Pfropfhülle A2 können z.B. ausgewählt sein aus den im folgenden aufgeführten Monomeren:

Styrol und seine substituierten Derivate, wie z.B. α-Methylstyrol, p-Methylstyrol, 3,4-Dimethylstyrol, p-tert.-Butylstyrol, o- und p-Divinylbenzol und p-Methyl-α-Methylstyrol oder $C_1$-$C_8$-Alkyl(meth)acrylate wie Methylmethacrylat, Ethylmethacrylat, Methylacrylat, Ethylacrylat, n-Butylacrylat, s-Butylacrylat; bevorzugt sind Styrol, α-Methylstyrol, Methylmethacrylat, und Acryl- und Methacrylverbindungen, wie z.B. Acrylnitril, Methacrylnitril, Acryl- und Methacrylsäure, Methylacrylat, Ethylacrylat, n- und Isopropylacrylat, n- und Isobutylacrylat, tert.-Butylacrylat, 2-Ethylhexylacrylat, Methylmethacrylat, Ethylmethacrylat, n- und Isopropylmethacrylat, n- und Isobutylmethacrylat, tert.-Butylmethacrylat, Cyclohexylmethacrylat, Isobornylmethacrylat, Maleinsäureanhydrid und dessen Derivate, wie Maleinsäureester, Malein5 säurediester und Maleinimide, z.B. Alkyl- und Arylmaleinimide, wie beispielsweise Methyl- oder Phenylmaleinimid.

Die Pfropfcopolymerisaten A können aber auch durch Pfropfung von vorgebildeten Polymeren auf geeignete Pfropfhomopolymerisate hergestellt werden. Beispiele dafür sind die Umsetzungsprodukte von Copolymeren, die Maleinsäureanhydrid- oder Säuregruppen enthalten, mit basenhaltigen Kautschuken.

Geeignete Herstellverfahren für Pfropfcopolymerisate A sind die Emulsions-, Lösungs-, Masse- oder Suspensionspolymerisation. Bevorzugt werden die Polymerisate A durch radikalische Emulsionspolymerisation hergestellt, insbesondere in Gegenwart von Latices der Komponente Al bei Temperaturen von 20 bis 90°C unter Verwendung wasserlöslicher oder öllöslicher Initiatoren wie Peroxodisulfat oder Benzylperoxid, oder mit Hilfe von Redoxinitiatoren. Redoxinitiatoren eignen sich auch zur Polymerisation unterhalb von 20°C.

Es können Kautschuke Verwendung finden, die bereits aus vorgebildeten Kern/Mantel-Kautschukteilchen bestehen. So kann beispielsweise der Kern aus einem Polybutadienkautschuk oder einem Siliconkautschuk, aber auch aus einem Styrol- oder Methylmethacrylat-, Homo- oder Copolymeren, wie z.B. Polystyrolacrylnitril bestehen. Der Mantel kann dann beispielsweise aus einem Polyacrylat bestehen (EP 260 558). Durch einfache Pfropfung oder mehrfache schrittweise Pfropfung können eine oder mehrere Pfropfhüllen auf die Kautschukteilchen aufgebracht werden, wobei jede Pfropfhülle eine andere Zusammensetzung haben kann. Zusätzlich zu den pfropfenden Monomeren können polyfunktionelle vernetzende oder reaktive Gruppen enthaltende Monomere mit aufgepfropft werden (s. z.B. EP-A 230 282, DE-OS 36 01 419, EP-A 269 861).

In manchen Fällen kann es zweckmäßig sein, eine Komponente Al aus unvernetztem Polymer zu verwenden. Als Monomere zur Herstellung dieser Polymere können alle voranstehend genannten dienen. Bevorzugte unvernetzte Pfropfgrundlagen Al sind z.B. Homo- und Copolymere von Acrylsäureestern, insbesondere des n-Butyl- und des Ethylhexylacrylats, Homo- und Copolymere des Butadiens oder des Isoprens, sowie Homo- und Copolymere des Butadiens oder des Isoprens, sowie Homo- und Copolymere des Ethylens, Propylens, Butylens, Isobutylens, als auch Poly(organosiloxane), alle mit der Maßgabe, daß sie linear oder auch verzweigt sein dürfen.

Die Polymerisate A enthalten im allgemeinen 1 bis 90 Gew.-%, bevorzugt 2 bis 80 und besonders bevorzugt 5 bis 50 Gew.-% Komponente A1 und 10 bis 99 Gew.-%, bevorzugt 20 bis 98, besonders bevorzugt 50 bis 95 Gew.-% der Pfropfauflage A2.

Erfindungsgemäße Komponenten B sind Vinylpolymere und (Meth)acrylpolymere. Beispiele sind Styrol-Acrylnitril-Copolymere, alpha-Methylstyrol-Acrylnitril-Copolymere, Styrol-Maleinsäureanhydrid-Copolymere, Styrol-Phenylmaleinimid-Copolymere, Styrol-Methylmethacrylat-Copolymere, Methylmethacrylat/Acrylnitril-Copolymere, Styrol-Acrylnitril-Maleinsäureanhydrid-Copolymere, Styrol-Acrylnitril-Phenylmaleinimid-Copolymere, $\alpha$-Methylstyrol-Acrylnitril-Methylmethacrylat-Copolymere, $\alpha$-Methylstyrol-Acrylnitril-tert.-Butylmethacrylat-Copolymere, aber auch Homopolymere wie Polystyrol, Polymethylmethacrylat.

Solche Polymerisate entstehen häufig bei der Pfropfpolymerisation zur Herstellung der Komponente A als Nebenprodukte, besonders dann, wenn große Mengen Monomere A2 auf kleine Mengen Kautschuk A1 gepfropft werden sollen. Die Vinylpolymeren und (Meth)-Acrylpolymere können nach bekannten radikalischen, anionischen und kationischen Polymerisationsverfahren hergestellt werden. Auch die bekannte Redoxpolymerisation oder die bekannte Polymerisation mit metallorganischen Mischkatalysatoren kann vorteilhaft sein.

Die Polymerisation kann in Masse, Lösung, Suspension oder Emulsion stattfinden, wie bekannt. Die mittleren Molekulargewichte (Gewichtsmittel) $M_w$ liegen im allgemeinen zwischen 10.000 und 2.000.000, bevorzugt zwischen 30.000 und 200.000.

Als weitere Komponente können die thermoplastischen Formmassen ein teilchenförmiges Pfropfcopolymerisat C enthalten mit einer mittleren Teilchengröße zwischen 60 und 10.000 nm aus, bezogen auf C

C1:     30 - 90 Gew.-% einer teilchenförmigen Pfropfgrundlage C1 mit einer Glastemperatur unterhalb von 0°C, die eine mittlere Teilchengröße von mehr als 40 nm aufweist und

C2 :     10 - 70 Gew.-% einer Pfropfauflage C2 aus

C21:     50 - 100 Gew.-% Styrol oder eines substituierten Styrols (C21) und

C22 :     bis 50 Gew.-% Acrylnitril oder Methacrylnitril (C22),

wobei die Summe aus A und C, bezogen auf die Formmasse, 1 - 99 Gew.-% beträgt und das Gewichtsverhältnis A:C 95:5 bis 5:95 beträgt.

Bevorzugt enthalten solche Formmassen bis zu 50 Gew.-%, bezogen auf die Summe aus A und B des teilchenförmigen Pfropfpolymerisats C, das aufgebaut ist aus

C1 :     30 - 90 Gew.-%, bevorzugt 40 - 80 Gew.-% einer teilchenförmigen Pfropfgrundlage C1 aus einem kautschukelastischen Polymeren auf Basis von Acrylat-, Dien-, EP-, EPDM- oder Siliconkautschuk;

C2:     10 - 70 Gew.-%, bevorzugt 20 - 60 Gew.-% einer Pfropfauflage aus

C21:     50 - 100 Gew.-%, bevorzugt 60 - 90 Gew.-% Styrol oder substituiertem Styrol (C21)

C22:     bis 50, bevorzugt 10 - 40 Gew.-% Acrylnitril, Methacrylnitril, $C_1$-$C_8$-Alkyl(meth)acrylat, (Meth)acrylsäure, Maleinsäureanhydrid, mit $C_1$-$C_8$-Alkyl- oder $C_6$-$C_{20}$-Arylgruppen N-substituiertes Maleinsäureimid oder deren Mischungen

mit einer mittleren Teilchengröße zwischen 60 und 10 000 nm, bevorzugt zwischen 80 und 1000 nm, wobei die Summe aus A + C, bezogen auf die gesamte Formmasse aus A, B und C, 1 - 99 Gew.-%, bevorzugt 10 - 90 Gew.-% und das Gewichtsverhältnis A:C von 95:5 bis 5:95, bevorzugt 90:10 bis 10:90 beträgt.

Für die Pfropfgrundlage C1 gilt das bei der Beschreibung der Komponente A1 Gesagte. Bevorzugt sind hier Dien- und Acrylatkautschuke, und insbesondere die Acrylatkautschuke.

Bevorzugt sind Pfropfgrundlagen C1, die aufgebaut sind aus

C11 : 70 - 99,9 Gew.-%, vorzugsweise 90 bis 99 Gew.-% mindestens eines Alkylacrylats mit 1 bis 8 C-Atomen im Alkylrest, vorzugsweise n-Butylacrylat und/oder 2-Ethyl-hexylacrylat, insbesondere n-Butylacrylat als alleiniges Alkylacrylat

C12 : 0 - 30 Gew.-%, insbesondere 20 - 30 Gew.-% eines weiteren copolymerisierbaren monoethylenisch ungesättigten Monomeren, wie Butadien, Isopren, Styrol, Acrylnitril, Methylmethacrylat und/oder Vinylmethylether

C13: 0,1 - 5 Gew.-%, vorzugsweise 1 - 4 Gew.-% eines copolymerisierbaren, polyfunktionellen, vorzugsweise bi- oder trifunktionellen, die Vernetzung bewirkenden Monomeren.

Als solche bi- oder polyfunktionellen Vernetzungsmonomeren C13 eignen sich Monomere, die vorzugsweise zwei, gegebenenfalls auch drei oder mehr, zur Copolymerisation befähigte ethylenische Doppelbindungen enthalten, die nicht in den 1,3-Stellungen konjugiert sind. Geeignete Vernetzungsmonomere sind beispielsweise Divinylbenzol, Diallylmaleat, Diallylfumarat, Diallylphthalat, Triallylcyanurat oder Triallylisocyanat. Als besonders günstiges Vernetzungsmonomeres hat sich der Acrylsäureester des Tricyclodecenylalkohols erwiesen (vgl. DE-A 12 60 135).

Diese Art von Pfropfgrundlagen ist an sich bekannt und in der Literatur beschrieben, beispielsweise in der DE-A 31 49 358.

Von den Pfropfauflagen C2 sind diejenigen bevorzugt, in denen C21: Styrol oder $\alpha$-Methylstyrol bedeutet. Bei der Komponente C22 haben sich neben Acrylnitril und Maleinsäureanhydrid besonders Methylmethacrylat sowie die mit $C_1$- bis $C_4$-Alkylgruppen oder mit $C_6$- bis $C_{20}$-Arylgruppen, insbesondere mit Phenyl, N-substituierten Maleinsäureimide als geeignet erwiesen. Als bevorzugte Monomere werden vor allem Styrol und Acrylnitril, $\alpha$-Methylstyrol und Acrylnitril, Styrol, Acrylnitril und Methylmethacrylat, Styrol und Maleinsäureanhydrid eingesetzt. Die Pfropfauflagen sind erhältlich durch Copolymerisation der Komponenten C21 und C22.

Ist die Pfropfgrundlage C1 der Pfropfpolymerisate C aus den Komponenten C11, gegebenenfalls C12 und C13 aufgebaut, so spricht man von ASA-Kautschuken. Ihre Herstellung ist an sich bekannt und beispielsweise in der DE-A 28 26 925, der DE-A 31 49 358 und der DE-A 34 14 118 beschrieben.

Die Herstellung des Pfropfmischpolymerisats C kann beispielsweise nach der in der DE-PS 12 60 135 beschriebenen Methode erfolgen.

Der Aufbau der Pfropfauflage (Pfropfhülle) des Pfropfmischpolymerisats kann ein- oder zweistufig erfolgen.

Im Falle des einstufigen Aufbaues der Pfropfhülle wird ein Gemisch der Monomeren C21 und C22 in dem gewünschten Gew.-Verhältnis im Bereich von 100:0 bis 50:50, vorzugsweise von 90:10 bis 60:40 in Gegenwart des Elastomeren C1, in an sich bekannter Weise (vgl. z.B. DE-OS 28 26 925), vorzugsweise in Emulsion, polymerisiert.

Im Falle eines zweistufigen Aufbaus der Pfropfhülle C2 macht die 1. Stufe im allgemeinen 20 bis 70 Gew.-%, vorzugsweise 25 bis 50 Gew.-%, bezogen auf C2, aus. Zu ihrer Herstellung werden vorzugsweise nur monoethylenisch-ungesättigte aromatische Kohlenwasserstoffe C21 verwendet.

Die 2. Stufe der Pfropfhülle macht im allgemeinen 30 bis 80 Gew.-%, insbesondere 50 bis 75 Gew.-%, jeweils bezogen auf C2, aus. Zu ihrer Herstellung werden Mischungen aus den genannten monoethylenisch ungesättigten aromatischen Kohlenwasserstoffen C21 und monoethylenisch ungesättigten Monomeren C22 im Gewichtsverhältnis C21/C22 von im allgemeinen 90:10 bis 60:40, insbesondere 80:20 bis 70:30 angewendet.

Die Bedingungen der Pfropfmischpolymerisation werden vorzugsweise so gewählt, daß mittlere Teilchengrößen von 60 bis 10 000 nm ($d_{50}$-Wert d. integralen Massenverteilung) resultieren. Maßnahmen hierzu sind bekannt und z.B. in der DE-OS 28 26 925 beschrieben. Bevorzugt sind Teilchengrößen zwischen 80 und 1000 nm.

Durch das Saatlatex-Verfahren kann direkt eine grobteilige Kautschukdispersion hergestellt werden.

Um möglichst zähe Produkte zu erzielen, ist es häufig von Vorteil, eine Mischung mindestens zweier Pfropfmischpolymerisate mit unterschiedlicher Teilchengröße zu verwenden.

Um dies zu erreichen, werden die Teilchen des Kautschuks in bekannter Weise, z.B. durch Agglomeration, vergrößert, so daß der Latex bimodal (80 bis 180 nm und 200 bis 1000 nm) aufgebaut ist.

In einer bevorzugten Ausführungsform wird eine Mischung aus zwei Pfropfmischpolymerisaten mit Teilchendurchmessern ($d_{50}$-Wert der integralen Massenverteilung) von 80 bis 180 nm bzw. 200 bis 1000 nm im Gewichtsverhältnis 70:30 bis 30:70 eingesetzt.

Der chemische Aufbau der beiden Pfropfmischpolymerisate ist vorzugsweise derselbe, obwohl die Hülle des grobteiligen Pfropfmischpolymerisates insbesondere auch zweistufig aufgebaut werden kann.

Mischungen aus der Komponente B und C, wobei letztere ein grob- und ein feinteiliges Pfropfmischpolymerisat aufweist, sind z.B. in der DE-OS 36 15 607 beschrieben. Andere Mischungen, wobei C eine zweistufige Pfropfhülle aufweist, sind aus EP-A 111 260 bekannt.

Als mögliche Mischungspartner D eignen sich Polycarbonate. Geeignete Polycarbonate sind beispielsweise solche auf Basis von Diphenolen HO-Ar-A-Ar-OH, wobei Ar den Arylrest (Phenyl, Phenylalkyl, halogensubstituiertes Aryl) und A eine Einfachbindung, C1-C3-Alkylen-, $C_2$-$C_3$-Alkyliden, C3-C6-Cycloalkylidengruppen sowie -S- oder -SO2- bedeuten.

Bevorzugte Diphenole der allgemeinen Formel I sind beispielsweise Hydrochinon, Resorcin, 4,4'-Dihydroxybiphenyl, 2,2-Bis(4-hydroxyphenyl)-propan, 2,4-Bis-(4-hydroxyphenyl)-2-methylbutan, 1,1-Bis-(4-hydroxyphenyl)-cyclohexan. Besonders bevorzugt 2,2-Bis-(4-hydroxyphenyl)-propan und 1,1-Bis-(4-hydroxyphenyl)-cyclohexan.

Polycarbonate sind allgemein bekannt und eingehend beschrieben.

Als Komponente E können die erfindungsgemäßen thermoplastischen Formmassen bis zu 50 Gew.-%, insbesondere 0,1 bis 20 Gew.-% faser- oder teilchenförmige Füllstoffe oder deren Mischungen enthalten. Dabei handelt es sich vorzugsweise um kommerziell erhältliche Produkte. Verarbeitungshilfsmittel und Stabilisatoren wie UV-Stabilisatoren, Schmiermittel und Antistatika werden üblicherweise in Mengen von 0,01 bis 5 Gew.-% verwendet, Verstärkungsmittel wie Kohlenstoffasern und Glasfasern hingegen von 5 bis 40 Gew.-%.

Die verwendeten Glasfasern können aus E-, A- oder C-Glas sein und sind vorzugsweise mit einer Schlichte und einem Haftvermittler ausgerüstet. Ihr Durchmesser liegt im allgemeinen zwischen 6 und 20 µm. Es können sowohl Endlosfasern (rovings) als auch Schnittglasfasern mit einer Länge von 1 bis 10 mm, vorzugsweise 3 bis 6 mm, eingesetzt werden.

Weiterhin können Füll- oder Verstärkungsstoffe, wie Glaskugeln, Mineralfasern, Whisker, Aluminiumoxidfasern, Glimmer, Quarzmehl und Wollastonit zugesetzt werden.

Außerdem seien Metallflocken (z.B. Aluminiumflokken der Fa. Transmet Corp.), Metallpulver, Metallfasern, metallbeschichtete Füllstoffe z.B. nickelbeschichtete Glasfasern) sowie andere Zuschlagstoffe, die elektromagnetische Wellen abschirmen genannt. Insbesondere kommen Aluminiumflocken (K 102 der Fa. Transmet) für EMI-Zwecke (electro-magnetic interference) in Betracht; ferner Abmischen dieser Masse mit zusätzlichen Kohlenstoffasern, Leitfähigkeitsruß oder nickelbeschichteten C-Fasern.

Die erfindungsgemäßen Formmassen können ferner weitere Zusatzstoffe enthalten, die für Polycarbonate, SAN-Polymerisate und Pfropfmischpolymerisate auf Basis von ASA oder deren Mischungen typisch und gebräuchlich sind. Als solche Zusatzstoffe seien beispielsweise genannt: Farbstoffe, Pigmente, Antistatika, Antioxidantien und insbesondere die Schmiermittel, die für die Weiterverarbeitung der Formmasse, z.B. bei der Herstellung von Formkörpern bzw. Formteilen erforderlich sind.

Die Herstellung der erfindungsgemäßen thermoplastischen Formmassen erfolgt nach an sich bekannten Verfahren durch Mischen der Komponenten. Es kann vorteilhaft sein, einzelne Komponenten vorzumischen. Auch das Mischen der Komponenten in Lösung und Entfernen der Lösungsmittel ist möglich.

Geeignete organische Lösungsmittel sind beispielsweise Chlorbenzol, Gemische aus Chlorbenzol und Methylenchlorid oder Gemische aus Chlorbenzol oder aromatischen Kohlenwasserstoffen, z.B. Toluol.

Das Eindampfen der Lösungsmittelgemische kann beispielsweise in Eindampfextrudern erfolgen.

Das Mischen der z.B. trockenen Komponenten kann nach allen bekannten Methoden erfolgen. Vorzugsweise geschieht jedoch das Mischen bei Temperaturen von 200 bis 320°C durch gemeinsames Extrudieren, Kneten oder Verwalzen der Komponenten, wobei die Komponenten notwendigenfalls zuvor aus der bei der Polymerisation erhaltenen Lösung oder aus der wäßrigen Dispersion isoliert worden sind.

Die erfindungsgemäße thermoplastische Formmassen können nach den bekannten Verfahren der Thermoplastverarbeitung bearbeitet werden, also z.B. durch Extrudieren, Spritzgießen, Kalandrieren, Hohlkörperblasen, Pressen oder Sintern.

Die erfindunggemäßen thermoplastischen Formmassen weisen vor allem eine hohe Zähigkeit, gute Chemikalien- und Witterungsstabilität sowie gute Fließfähigkeit und Steifigkeit auf.

Beispiele

Es wurden folgende Komponenten eingesetzt:

A. Mikroemulsions-Pfropfkautschuk

1. Herstellung der Pfropfgrundlage
5000 g Wasser, 200 g des Na-Salzes einer $C_{12}$- bis $C_{18}$-Paraffinsulfonsäure, 9,2 g Kaliumperoxodisulfat, 9 g Natriumhydrogencarbonat und 4,5 g Natriumpyrophosphat wurden unter Rühren auf 65°C erwärmt. Ein Gemisch aus 1960 g n-Butylacrylat und 40 g Dicyclopentadienylacrylat wurde innerhalb von 3 Stunden zugegeben, bei 2 Stunden Nachreaktionszeit. Teilchengröße d(50) : 34 nm; Teilchengrößenuneinheitlichkeit Q: 0,50.

2. Pfropfung
4800 g der vorstehenden Emulsion, 1900 g Wasser und 5 g Kaliumperoxodisulfat wurden unter Rühren auf 65°C erwärmt. 664 g Styrol und 221 g Acrylnitril wurden innerhalb von 2 Stunden zudosiert, bei 2 Stunden Nachreaktionszeit.

Teilchengröße d(50) : 41 nm; Teilchengrößenuneinheitlichkeit Q: 0,44.

Aus der Teilchengröße und der Teilchengrößenuneinheitlichkeit kann man erkennen, daß die Pfropfhülle ausschließlich auf die Pfropfgrundlage aufpolymerisiert und keine nichtgepfropften Anteile gebildet werden.

### 3. Einarbeitung

Nach Auskoagulieren der Emulsion in der Kälte (3 Tage bei -20°C) wurde nach dem Auftauen filtriert, gewaschen und unter Vakuum bei 60°C getrocknet.

B. Ein Copolymerisat aus Styrol und Acrylnitril im Gew.-Verhältnis 65:35 mit einer Viskositätszahl von 80 ml/g (gemessen an einer 0,5 gew.-%igen Lösung in Dimethylformamid bei 23°C), hergestellt durch kontinuierliche Lösungspolymerisation nach einem Verfahren wie es beispielsweise im Kunststoff-Handbuch, Vieweg-Daumiller, Band V (Polystyrol), Carl-Hanser-Verlag, München 1969, Seite 124, Zeilen 12ff, beschrieben ist.

### Vergleichsversuch

Als Vergleichsversuch zum Mikroemulsionspolymerisat A wurde ein analog aufgebautes Emulsionspolymerisat hergestellt, jedoch mit einer Teilchengröße von 85 nm nach der Pfropfung.

$\beta_1$) 16 g Butylacrylat und 0,4 g Tricyclodecenylacrylat, die in 150 g Wasser unter Zusatz von 1 g des Natriumsalzes einer $C_{12}$-$C_{18}$-Paraffinsulfonsäure, 0,3 g Kaliumpersulfat, 0,3 g Natriumhydrogencarbonat und 0,15 g Natriumpyrophosphat unter Rühren auf 60°C erwärmt wurden. 10 Minuten nach dem Anspringen der Polymerisationsreaktion wurden innerhalb von 3 Stunden eine Mischung aus 82 g Butylacrylat und 1,6 g Tricyclodecenylacrylat zugegeben. Nach Beendigung der Monomerzugabe wurde noch eine Stunde gerührt. Der erhaltene Latex des vernetzten Butylacrylat-Polymerisats hatte einen Feststoffgehalt von 40 Gew.-%, die mittlere Teilchengröße (Gewichtsmittel) wurde zu 70 nm ermittelt und die Teilchengrößenverteilung war eng (Quotient Q = 0,29).

$\beta_2$) 150 g nach $\beta_1$) erhaltenen Polybutylacrylat-Latex wurden mit 40 g einer Mischung aus Styrol und Acrylnitril (Gewichtsverhältnis 75:25) und 60 g Wasser gemischt und unter Rühren nach Zusatz von weiteren 0,03 g Kaliumpersulfat und 0,05 g Lauroylperoxid 4 Stunden auf 65°C erhitzt. Nach Beendigung der Pfropfmischpolymerisation wurde das Polymerisationsprodukt mittels Calciumchloridlösung bei 95°C aus der Dispersion gefällt, mit Wasser gewaschen und im warmen Luftstrom getrocknet. Der Pfropfgrad des Pfropfmischpolymerisats betrug 35 %, die Teilchengröße 85 nm.

Die Polymermischungen wurden auf einem Doppelschneckenextruder ZSK 30 der Fa. Werner & Pfleiderer unter folgenden Bedingungen hergestellt:

a) Temperatur: 250°C
b) Drehzahl: 200 U/min
c) Durchsatz. 10 kg/h

30 Gew.-% der Komponente A bzw. des Vergleichsversuchs wurden mit 70 Gew.-% der Komponente B unter den angegebenen Bedingungen extrudiert, und das erhaltene Granulat anschließend bei 250°C zu Prüfkörpern verspritzt.

Die Wärmeformbeständigkeit Vicat B50 wurde nach DIN 53460 bestimmt (Einheit °C).

Der Schmelzindex MVI wurde nach DIN 53735 bei 200°C und 21,6 kg Belastung gemessen (Einheit ml/10 min).

Die Bestimmung des Elastizitäts-Moduls erfolgte nach DIN 53457 (Einheit N/mm$^2$).

| | Beispiel | Vergleichsversuch |
| --- | --- | --- |
| Teilchengröße A | 41 | 85 |
| Vicat | 98 | 98 |
| MVI | 11,6 | 8,7 |
| E-Modul | 2614 | 2485 |

### Patentansprüche

1. Pfropfcopolymerisat A aus, bezogen auf A,

   A1:  1 - 90 Gew.-% einer teilchenförmigen Pfropfgrundlage A1 mit einer Glastemperatur unterhalb von 0°C, die eine mittlere Teilchengröße unterhalb von 40 nm aufweist und

   A2:  10 - 99 Gew.-% einer Pfropfauflage A2 aus weiche oder harte Polymere bildenden, olefinisch ungesättigten Monomeren,

   wobei das Pfropfcopolymerisat A insgesamt eine mittlere Teilchengröße von weniger als 50 nm aufweist.

2. Formmasse aus, bezogen auf die Summe aus A' und B',

A': 1 - 99 Gew.-% eines Pfropfcopolymerisats A' aus, bezogen auf A.

A1': 1 - 90 Gew.-% einer teilchenförmigen Pfropfgrundlage Al' mit einer Glastemperatur unterhalb von 0°C, die eine Teilchengröße unterhalb von 40 nm aufweist und

A2': 10 - 99 Gew.-% einer Pfropfauflage A2' aus - bezogen auf A2 -

A21: 40 - 100 Gew.-% Einheiten des Styrols, eines substituierten Styrols oder eines harte Polymere bildenden (Meth)acrylsäureesters oder deren Mischungen (A21) und

A22: bis 60 Gew.-% Acrylnitril oder Methacrylnitril (A22)

wobei das Pfropfcopolymerisat A' insgesamt eine mittlere Teilchengröße von weniger als 50 nm aufweist;

B': 1 - 99 Gew.-% eines thermoplastischen Copolymerisats B' aus, bezogen auf B',

B1': 50 - 100 Gew.-% Styrol oder eines substituierten Styrols oder eines harte Polymere bildenden (Meth)acrylsäureesters oder deren Mischungen (B1') und

B2': bis 50 Gew.-% Acrylnitril oder Methacrylnitril (B2').

**3.** Formmasse nach Anspruch 1, enthaltend als teilchenförmige Pfropfgrundlage Al einen Acrylat-, Dien-, EP-, EPDM- oder Silicon-Kautschuk.

**4.** Formmasse nach Anspruch 1, enthaltend als weiteren Bestandteil C ein teilchenförmiges Pfropfcopolymerisat C mit einer mittleren Teilchengröße zwischen 60 und 10 000 nm aus, bezogen auf C,

C1: 30 - 90 Gew.-% einer teilchenförmigen Pfropfgrundlage C1 mit einer Glastemperatur unterhalb von 0°C, die eine mittlere Teilchengröße von mehr als 40 nm aufweist und

C2: 10 - 70 Gew.-% einer Pfropfauflage C2 aus

C21: 50 - 100 Gew.-% Styrol oder eines substituierten Styrols (C21) und

C22: bis 50 Gew.-% Acrylnitril oder Methacrylnitril (C22),

wobei die Summe aus A und C, bezogen auf die Formmasse, 1 - 99 Gew.-% beträgt und das Gewichtsverhältnis A:C 95:5 bis 5:95 beträgt.

## Claims

**1.** A graft copolymer A comprising, based on A,

A1: from 1 to 90% by weight of a particulate graft base A1 having a glass transition temperature below 0°C and having a median particle size below 40 nm, and

A2: from 10 to 99% by weight of a graft A2 comprising olefinically unsaturated monomers which form flexible or rigid polymers,

the graft copolymer A having in total a median particle size of less than 50 nm.

**2.** A molding material comprising, based on the sum of A' and B',

A': from 1 to 99% by weight of a graft copolymer A' comprising, based on A,

A1': from 1 to 90% by weight of a particulate graft base A1' having a glass transition temperature below 0°C and having a particle size below 40 nm, and

A2': from 10 to 99% by weight of a graft A2' comprising, based on A2,

A21: from 40 to 100% by weight of units of styrene, a substituted styrene or a (meth)acrylic acid ester that forms rigid polymers, or mixtures thereof (A21), and

A22: up to 60% by weight of acrylonitrile or methacrylonitrile (A22),

the graft copolymer A' having in total a median particle size of less than 50 nm;

B': from 1 to 99% by weight of a thermoplastic copolymer B' comprising, based on B',

B1': from 50 to 100% by weight of styrene or a substituted styrene or a (meth)acrylic acid ester that forms rigid polymers, or mixtures thereof (B1'), and

B2': up to 50% by weight of acrylonitrile or methacrylonitrile (B2').

**3.** A molding material as claimed in claim 1 containing, as particulate graft base A1, an acrylate, diene, EP, EPDM or silicone rubber.

**4.** A molding material as claimed in claim 1 containing, as further constituent (C), a particulate graft copolymer C having a median particle size of from 60 to 10,000 nm, comprising, based on C,

C1: from 30 to 90% by weight of a particulate graft base C1 having a glass transition temperature below 0°C and having a median particle size of more than 40 nm, and

C2: from 10 to 70% by weight of a graft C2 comprising

C21: from 50 to 100% by weight of styrene or a substituted styrene (C21) and

C22: up to 50% by weight of acrylonitrile or methacrylonitrile (C22),

the sum of A and C, based on the molding material, being from 1 to 99% by weight and the weight ratio A:C being from 95:5 to 5:95.

## Revendications

1. Copolymère greffé A constitué par, rapportés à A,

A1: de 1 à 90% en poids d'un substrat de greffage particulaire A1 possédant une température de transition vitreuse inférieure à 0°C, qui présente une granulométrie moyenne inférieure à 40 nm et

A2: de 10 à 99% en poids d'un revêtement de greffage A2 constitué par des monomères à insaturation oléfinique formant des polymères tendres ou durs,

le copolymère greffé A présentant globalement une granulométrie moyenne inférieure à 50 nm.

2. Matière moulable constituée par, rapportés à la somme de A' et B',

A': de 1 à 99% en poids d'un copolymère greffé A' constitué par, rapportés à A,

A1': de 1 à 90% en poids d'un substrat de greffage particulaire A1' possédant une température de transition vitreuse inférieure à 0°C, qui présente une granulométrie inférieure à 40 nm, et

A2': de 10 à 99% en poids d'un revêtement de greffage A2' constitué par, rapportés à A2,

A21: de 40 à 100% en poids d'unités de styrène, de styrène substitué ou d'un ester (méth) acrylique formant un polymère dur, ou encore de leur mélange (A21) et

A22: à concurrence de 60% en poids d'acrylonitrile ou de méthacrylonitrile (A22),

le copolymère greffé A' présentant globalement une granulométrie moyenne inférieure à 50 nm;

B': de 1 à 99% en poids d'un copolymère thermoplastique B' constitué par, rapportés à B',

B1': de 50 à 100% en poids de styrène ou de styrène substitué ou d'un ester (méth)acrylique formant des polymères durs, ou encore de leurs mélanges (B1') et

B2': à concurrence de 50% en poids d'acrylonitrile ou de méthacrylonitrile (B2').

3. Matière moulable selon la revendication 1, contenant, comme substrat de greffage particulaire A1, un caoutchouc d'acrylate, un caoutchouc diénique, un caoutchouc EP, un caoutchouc EPDM ou un caoutchouc de silicone.

4. Matière moulable selon la revendication 1, contenant, comme constituant supplémentaire C, un copolymère greffé particulaire C possédant une granulométrie moyenne entre 60 et 10.000 nm, constitué par, rapportés à C,

C1 : de 30 à 90% en poids d'un substrat de greffage particulaire C1 possédant une température de transition vitreuse inférieure à 0°C, qui présente une granulométrie moyenne supérieure à 40 nm et

C2: de 10 à 70% en poids d'un revêtement de greffage C2 constitué par

C21: de 50 à 100% en poids de styrène ou de styrène substitué (C21) et

C22: à concurrence de 50% en poids d'acrylonitrile ou de méthacrylonitrile (C22),

la somme de A et C, rapportés à la matière moulable, s'élevant de 1 à 99% en poids et le rapport pondéral A:C s'élevant de 95:5 à 5:95.